# EUROPEAN PATENT SPECIFICATION

(11) **EP 1 916 282 B1**
(45) Date of publication and mention of the grant of the patent: **29.06.2011**
(21) Application number: 05768446.6
(22) Date of filing: 03.08.2005
(51) Int. Cl.: C09D 163/00, C09D 183/10, B32B 15/08, C23C 26/00

(54) **WATER-BASE COATING COMPOSITION AND COATED STEEL SHEET**
LACK AUF WASSERBASIS UND BESCHICHTETES STAHLBLECH
COMPOSITION DE REVETEMENT A BASE AQUEUSE ET FEUILLE D'ACIER REVETUE

(43) Date of publication of application: 30.04.2008
(73) Proprietor: Nippon Paint Marine Coatings Co., Ltd., Kobe-shi, Hyogo 653-0045 (JP)
(72) Inventor: MORIMOTO, Masato NIPPON PAINT MAR. COAT., CO. LTD., Osaka 572-8501 (JP); FUKUDA, Hideo NIPPON PAINT MARINE COATINGS CO.LTD, Osaka 572-8501 (JP)
(74) Representative: Vossius & Partner
(86) International application number: PCT/JP2005/014185
(87) International publication number: WO 2007/015294

(56) References cited:
- JP-A- 8 073 596
- JP-A- 9 296 023
- JP-A- 10 036 711
- JP-A- 10 195 202
- JP-A- 11 269 249
- JP-A- 62 212 480
- JP-A- 2001 240 792
- JP-A- 2002 188 046
- JP-A- 2003 119 245
- US-A1- 2004 249 044
- DATABASE WPI Week 200238 Thomson Scientific, London, GB; AN 2002-343293 XP002519724 & JP 2001 294622 A (MITSUBISHI RAYON CO LTD) 23 October 2001 (2001-10-23)
- DATABASE WPI Week 200307 Thomson Scientific, London, GB; AN 2003-069972 XP002519725 & JP 2002 233819 A (NIPPON PAINT CO LTD) 20 August 2002 (2002-08-20)
- DATABASE WPI Week 200413 Thomson Scientific, London, GB; AN 2004-125551 XP002519726 & JP 2003 119245 A (DAINIPPON INK & CHEM INC) 23 April 2003 (2003-04-23)

## Description

### TECHNICAL FIELD

The present invention relates to a water-base coating composition and a coated steel sheet.

### BACKGROUND ART

Solvent type coatings have mainly been used for anticorrosion coating in large structures, such as ships, bridge, tanks and plants. In the coatings, however, the demand for water-base coatings using water as a solvent has recently been increasing due to consideration of environmental preservation, such as reduction in volatile organic compounds (VOC) and consideration of the safety during coating or storage of coatings.

Among such applications, ships, bridges and the like require a high level of anticorrosion property because they are used in an environment where they are liable of be influenced by salt water. However, since water-base coatings have a hydrophilic functional group, they will be inferior in anticorrosion property to solvent type coatings. Moreover, in coating of such large structures, the coating must be an ambient temperature drying coating since curing by heating cannot be applied. In addition, even in use of a water-base coating, it is required to give coating film appearance, such as gloss as good as that of solvent coatings. In such restrictions, it has been very difficult to obtain an ambient temperature drying, water-base coating composition which is excellent in anticorrosion property and good in coating film appearance. Furthermore, such problems will become more serious when coating is done under a high humidity because the coating film appearance deteriorates easily.

Patent document 1 discloses an aqueous dispersion of a vinyl-modified epoxy ester resin having a specific structure. It also discloses that a coating film formed with a water-base coating composition containing the aqueous dispersion has excellent corrosion resistance. However, even if coating is carried out using such coating compositions, the problems mentioned above cannot be solved completely.

Patent document 2 discloses a specific block polymer containing a polyorganosiloxane unit and a polyalkylene oxide unit. It is disclosed that when a small amount of the block polymer is added to a coating material, it can impart surface modification effects, such as a surface tension regulating function and an adhesiveness imparting function, to the coating material. However, use of this compound for an anticorrosive, ambient temperature curing type coating is not disclosed.

Patent document 3 discloses calcium carbonate suitable for incorporation into water-based coating compositions. However, use of this coating for water-base coatings that are required to have high anticorrosion property is not disclosed.
Patent document 1: Japanese Patent Laying-Open No. 2003-119245 A
Patent document 2: Japanese Patent Laying-Open No. Hei 10-195202 A
Patent document 3: Japanese Patent Laying-Open No. Sho 62-212480 A

### DISCLOSURE OF THE INVENTION

### PROBLEMS TO BE SOLVED BY THE INVENTION

In light of the above-mentioned situations, an object of the present invention is to provide a water-base coating composition and a coated steel sheet coated with the water-base coating composition, the composition being suitable for use in ships, bridges, etc. and having excellent gloss, coating film appearance and anticorrosion property, which properties do not deteriorate even in coating under high humidity conditions.

### MEANS FOR SOLVING THE PROBLEMS

The present invention is a water-base coating composition including an aqueous dispersion type vinyl-modified epoxy ester resin and calcium carbonate, wherein the calcium carbonate is precipitated calcium carbonate treated with a salt of a vinyl polymer having a carboxyl group and is contained in the coating composition in a proportion of from 20 to 50% by volume in a solid content, and a volume ratio of pigment/total solid content of the coating is 50% or less.

It is desirable that the calcium carbonate has an average particle diameter of from 0.01 to 0.5 µm.

It is desirable that the salt of a polymer having a carboxyl group be a sodium, ammonium and/or amino salt of a vinyl polymer obtained by polymerizing a vinyl monomer composition containing at least one α,β unsaturated dicarboxylic acid selected from the group consisting of acrylic acid, methacrylic acid, crotonic acid, maleic acid and itaconic acid.

The aqueous dispersion type vinyl-modified epoxy ester resin is desirably one obtained by subjecting a condensate (c) produced by condensing an epoxy resin (a) and a fatty acid (b) as essential components and a vinyl monomer composition (d) containing an acid group-containing monomer to graft polymerization.

It is desirable that the amount of the mixture (d) of the vinyl compounds is not less than 15 parts by mass based on 100 parts by mass of the combined weight of the condensate (c) and the mixture (d).

It is desirable that the water-base coating composition further contains a silicone-modified epoxy resin.

It is desirable that the silicone-modified epoxy resin includes a compound represented by the following general formula (1): 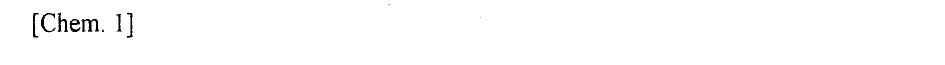 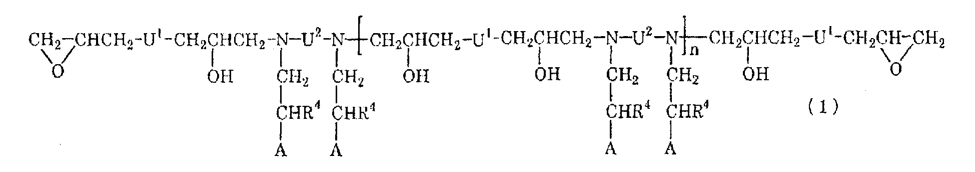 wherein U¹ is -O(R³O)_{b}-, where R³ is -(CH₂)_{c}- or -CH₂CH(CH₃)-, and U² is a structure represented by 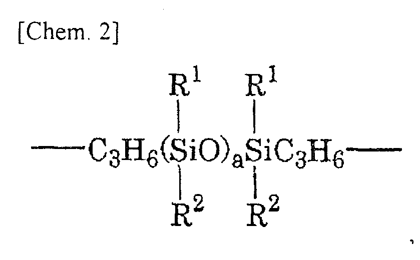 or U¹ is a structure represented by 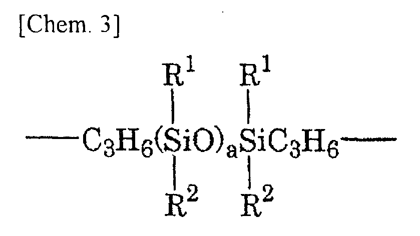 and U² is -O(R³O)_{b}-, where R³ is -(CH₂)_{c}- or -CH₂CH(CH₃)-, wherein R¹ and R² are each an alkyl group having 1 to 8 carbon atoms, an aryl group having 6 to 10 carbon atoms or an aralkyl group having 7 to 9 carbon atoms, R⁴ is hydrogen or a methyl group, a is an integer of from 1 to 135, b is an integer of from 2 to 230 and c is an integer of from 1 to 4, A is an organic group bonding to its adjoining -CHR⁴- with a carbonyl group interposed therebetween, n is an integer of from 1 to 16, R¹⁰ is an alkyl group having from 1 to 8 carbon atoms which may have a hydroxyl group, and/or a compound represented by the following general formula (2): 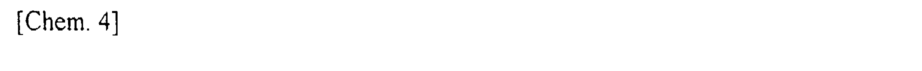 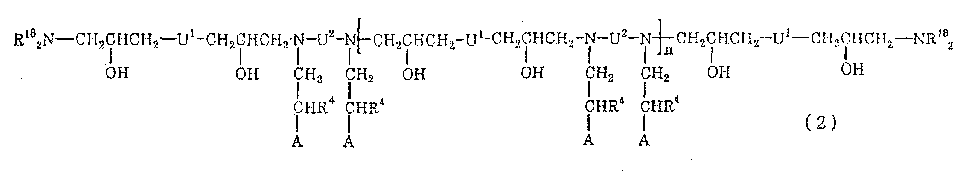 wherein U¹, U², and R¹ through R⁴ have the same definitions as general formula (1).

The present invention is also directed to a coated steel sheet having a coating film formed from the water-base coating composition mentioned above.

In the following, the present invention is described in detail.

The water-base coating composition of the present invention contains a specific water-dispersible resin and also contains a relatively large amount of calcium carbonate having been subjected to a specific treatment. That is, incorporation of calcium carbonate relatively more than usual can increase the thickness of a coating film in coating. If it is possible to thicken a coating film, the anti-corrosiveness will thereby be enhanced. As a result of this, it is possible to improve the anti-corrosiveness. Further, choosing a specific species as the calcium carbonate for use prevents occurrence of problems such as deterioration in appearance. Therefore, a coating composition is obtained which solves all the problems, namely, to provide a water-base, ambient temperature drying coating, to improve anti-corrosiveness, and to maintain appearance and the like. In addition, the water-base coating composition of the present invention has an excellent property in that deterioration in appearance of a coating film does not occur even if coating is performed under high humidity conditions.

The water-base coating composition of the present invention contains calcium carbonate in a proportion of from 20 to 50% by volume in a solid content. This can increase the viscosity of the coating and therefore it is possible to increase the thickness of a coating film formed by one coating operation. As a result, it is possible to improve the anticorrosion property of a coating film. The amount of the calcium carbonate to be incorporated is preferably from 20 to 50% by volume, and more preferably from 30 to 50% by volume. If it is less than 20% by volume, the above-mentioned effects can not be obtained sufficiently. If it is more than 50% by volume, coating film appearance, such as gloss, will be affected.

The calcium carbonate is precipitated calcium carbonate treated with a salt of a vinyl polymer having a carboxyl group. The precipitated calcium carbonate thus treated exerts good dispersibility in water and therefore it will not cause problems such as deterioration in appearance even when it is incorporated in an amount as large as from 20 to 50% by volume in a solid content.

The water-base coating composition of the present invention may be one which further contains a pigment other than the above-mentioned calcium carbonate. In such a case, it must be contained in a proportion such that the volume ratio of a pigment/a total solid content of the coating may be 50% by volume or less. By adjusting the amount to within the above-mentioned range, it is possible to maintain the gloss of a coating film and it therefore is possible to form a coating film with good appearance.

Examples of other pigment which can be used for the water-base coating composition of the present invention include extenders such as precipitated barium sulfate, clay and talc; coloring pigments such as titanium oxide and carbon; and rust preventive pigments such as zinc phosphate.

The salt of a vinyl polymer having a carboxyl group is desirably a sodium, ammonium and/or amino salt of a vinyl polymer obtained by polymerizing a vinyl monomer composition containing at least one α, β-unsaturated dicarboxylic acid selected from the group consisting of acrylic acid, methacrylic acid, crotonic acid, maleic acid and itaconic acid.

The salt of a vinyl polymer having a carboxyl group is desirably a copolymer of an α,β-unsaturated monocarboxylic acid (acrylic acid, methacrylic acid, crotonic acid, etc.) and an α, β-unsaturated dicarboxylic acid (maleic acid, itaconic acid, and the like). It is more desirable that the amount of the α, β-unsaturated dicarboxylic acid is 120 parts by mass or less based on 100 parts by mass of the α,β-unsaturated monocarboxylic acid.
The salt of a vinyl polymer having a carboxyl group desirably has a number average molecular weight of from 500 to 50000. By adjusting to within such a range, it is possible to achieve a favorable treatment on calcium carbonate. Here, the number average molecular weight is a value obtained, in terms of polystyrene, through measurement by gel permeation chromatography (GPC).

The salt of a vinyl polymer having a carboxyl group can be obtained by performing polymerization of the monomer in a solvent such as water and organic solvents, and neutralizing the resulting vinyl polymer with a sodium compound, an ammonium compound, an organic amine compound, or the like.

The treatment of the calcium carbonate with the salt of a vinyl polymer having a carboxyl group may be a treatment by wet grinding, drying/powderization, or the like. In the treatment, it is desirable to cause from 0.01 to 10 parts by mass, based on 100 parts by mass of the calcium carbonate solid content, of the salt of a vinyl polymer having a carboxyl group to be adsorbed.

The average particle diameter of the calcium carbonate is desirably from 0.01 to 0.5 µm. If it is less than 0.01 µm, a problem that the calcium carbonate easily flocculates and the storage stability of a coating will deteriorate may arise. If it exceeds 0.5 µm, a problem that good gloss of a coating film can not be obtained may arise. The average particle diameter as referred to herein is the length of a side of a cubic crystal determined from the specific surface area measured by the gas absorption method (BET method), while assuming calcium carbonate particles to be cubic particles.

A commercially available product may also be used as the calcium carbonate treated with the salt of a vinyl polymer having a carboxyl group. One example of such a commercially available product is LUMINUS (manufactured by Maruo Calcium Co., Ltd.).

The water-base coating composition of the present invention contains the aqueous dispersion type vinyl-modified epoxy ester resin. The aqueous dispersion type vinyl-modified epoxy ester resin is a resin obtained by modifying an epoxy ester resin with a compound containing a vinyl group and is a water-dispersible, ambient temperature curing resin. It has a characteristic of being excellent particularly in anticorrosion property.

The aqueous dispersion type vinyl-modified epoxy ester resin is desirably one obtained by subjecting a condensate (c) produced by condensing an epoxy resin (a) and a fatty acid (b) as essential components and the vinyl monomer composition (d) containing an acid group-containing monomer to graft polymerization. The aqueous dispersion type vinyl-modified epoxy ester resin obtained by the method shown above has a particularly excellent characteristic with respect to anticorrosion property.

Regarding the proportions of the epoxy resin (a) and the fatty acid (b) used in the synthesis of the condensate (c), it is desirable to use them so that the equivalent ratio of the epoxy groups in the epoxy resin may be in excess of that of the carboxyl groups originating in a fatty acid.

Specific examples of the epoxy resin (a) include various epoxy resins such as bisphenol type epoxy resins, alicyclic epoxy resins, phenol novolak type epoxy resins, polyethylene glycol-based epoxy resins, and epoxidized polybutadiene.

As the bisphenol type epoxy resin, EPICLON 850, 1050, 3050, 4050, 7050 (epoxy resins manufactured by Dainippon Ink & Chemicals, Inc.), EPICOAT 828, 834, 1001, 1004, 1007, 1009 (epoxy resins manufactured by Shell, Netherlands), DER 660,661J, 662,664J, 667J, 668,669J (epoxy resins manufactured by the Dow Chemical Co., Ltd. USA) may be used, for example.

As the alicyclic epoxy resin, UNOX 201, 289 (epoxy resins manufactured by Union Carbide Corporation, U.S.A.) may be used, for example.

As the phenol novolak type epoxy resin, EPICLON N-740, 775 (Dainippon Ink & Chemicals, Inc.) may be used, for example.

As the polyethylene glycol-based epoxy resin, EPICOAT 812 (epoxy resin manufactured by Shell, Netherlands), and EPOLIGHT 40E, 200E, 400E (epoxy resins manufactured by Kyoeisha Chemical Co., Ltd.) may be used, for example.

As the epoxidized polybutadiene, BF-1000 (an epoxy resin manufactured by Adeka Argus Industry Co., Ltd.) may be used, for example.

The epoxy resin (a) may be used singly or as a mixture of two or more kinds thereof. It is more desirable to use a bisphenol type epoxy resin because of its excellent corrosion resistance as a major ingredient.

The fatty acid (b) is not particularly restricted and examples thereof include drying oil fatty acids such as tung oil fatty acid, linseed oil fatty acid, dehydrated caster oil fatty acid, castor oil fatty acid, tall oil fatty acid, cottonseed oil fatty acid, soybean oil fatty acid, olive oil fatty acid, safflower oil fatty acid and rice bran oil fatty acid, or nondrying oil fatty acids such as hydrogenated coconut oil fatty acid, coconut oil fatty acid and palm oil fatty acid. Further examples include unsaturated fatty acids such as oleic acid, linoleic oil, linolenic acid, eleostearic acid, ricinoleic acid, and saturated fatty acids such as octylic acid, lauric acid and stearic acid purified from those oil fatty acid. The fatty acid may be used singly or as a mixture of two or more kinds thereof.

An unreacted epoxy group originating in the epoxy resin (a) may be capped with an acid group-containing compound.

Examples of the acid group-containing compound include organic carboxylic acids such as benzoic acid, p-tert-benzoic acid, isooctanoic acid, isodecanoic acid, cyclohexanoic acid, phthalic acid, isophthalic acid, terephthalic acid, tetrahydrophthalic acid, himic acid (a product of Hitachi Chemical Co., Ltd.), maleic acid, fumaric acid, adipic acid, sebacic acid, dimer acid, trimellitic acid and pyromellitic acid. Among these, use of a monobasic acid compound (e) is preferred. Examples of such a monobasic acid compound (e) include conventional organic carboxylic acids such as benzoic acid, p-tert-benzoic acid, isooctanoic acid, isodecanoic acid and cyclohexanoic acid.

Subsequently, the epoxy ester and the mixture (d) of the vinyl compounds containing an acid group-containing monomer are subjected to polymerization reaction in the presence of a radical polymerization initiator under heating conditions, in an organic solvent if necessary, to obtain a graft polymerization product of the epoxyester and the vinyl compound (vinyl-modified epoxy ester resin). The reaction may be performed under a gauge pressure within the range of from 1 to 100 kg/cm², and at a reaction temperature within the range of from 50 to 150°C. In some cases, polymerization may be performed under a pressure more than the above and at a temperature lower than the above. The amount of nonvolatile matter in polymerization is desirably within the range of from 1 to 90% by mass, and more desirably within the range of from 40 to 80% by mass.

The mixture (d) of the vinyl compounds containing an acid group-containing monomer is desirably a mixture containing an aromatic vinyl compound, an alkyl (meth)acrylate having an alkyl group having 4 or more carbon atoms, and an acid group-containing vinyl compound. Regarding the ratio of the mixture used, it is desirable that the amount of the mixture (d) of the vinyl compounds containing an acid group-containing monomer is 15 parts by mass or more based on 100 parts by mass of the combined amount of the condensate (c) containing the epoxy resin (a) and the fatty acid (b) and the mixture (d) of the vinyl compounds containing an acid group-containing monomer. In the present invention, if the amount of the mixture (d) of the vinyl compounds containing an acid group-containing monomer is 15% or less, a product failing to have a desired balance between corrosion resistance and hardness will be obtained.

The vinyl-modified epoxy ester resin has an acid group derived from the acid group-containing monomer, and this acid group is essential for make it water-base in a step which will be performed later. The concentration of the acid group is desirably within the range of from 15 to 50 gmKOH/g in terms of the acid value of the solid content in the vinyl-modified epoxy ester resin. When it is within this range, it is possible to achieve dispersion in water well and also achieve good adhesiveness to a substrate or pigment dispersing property. It is also possible to obtain excellent performances caused by water of a resulting coating film, namely, corrosion resistance, water resistance, alkali resistance, and the like.

It is desirable that the number average molecular weight of the vinyl-modified epoxy ester resin be within the range of from 1,000 to 100,000. A product having a number average molecular weight within the above range is excellent in corrosion resistance, water resistance, etc., and can also be dispersed well in water.

Next, compounds which can be used as the mixture (d) of the vinyl compounds containing an acid group-containing monomer are explained. Representative examples of the acid group-containing monomer include monomers having a carboxyl group (A), such as monocarboxylic acids having an unsaturated double bond, e.g. (meth)acrylic acid, 2-carboxyethyl acrylate, crotonic acid, vinylacetic acid, monovinyl adipate, monovinyl sebacate, monomethyl itaconate, monomethyl maleate, monomethyl fumarate, mono[2-(meth)acryloyloxyethyl] succinate, mono[2-(meth)acryloyloxyethyl] phthalate, mono[2-(meth)acryloyloxyethyl] hexahydrophthalate and sorbic acid; and unsaturated dicarboxylic acids, e.g. itaconic acid, maleic acid and fumaric acid.

Besides the acid group-containing monomers shown above, the following types of monomers may also be used: cycloalkyl (meth)acrylates; alkyl-substituted cycloalkyl (meth)acrylates; (meth)acrylates having an alkyl or aralkyl group (B); and aromatic vinyl compounds (C).

Among these, it is preferable to use, in combination with (A), which is an essential ingredient, an alkyl (meth)acrylate having an alkyl group having 4 or more carbon atoms, a cycloalkyl group or an alkyl-substituted cycloalkyl group, and more preferably an alkyl (meth)acrylate having an alkyl group having 4 or more carbon atoms among the monomers (B) shown above. Furthermore, use of monomers (A), (B) and (C) is preferred.

Besides the monomers shown above, monomers shown below can also be used as the mixture (d) of vinyl compounds containing an acid group-containing monomer: ω-alkoxyalkyl (meth)acrylates (D); vinyl esters of carboxylic acids (E); crotonic acid esters (F); unsaturated dibasic acid diesters (G); cyano group-containing vinyl monomers (H); fluoroolefins (I); chlorinated olefins (J); α-olefins (K); alkyl vinyl ethers (L); cycloalkyl vinyl ethers (M); tertiary amide group-containing vinyl monomers (N); (meth)acrylic acid esters containing a hydroxyl group (O); allyl compounds containing a hydroxyl group (P); vinyl ether compounds containing a hydroxyl group (Q); unsaturated carboxylic acid amide compounds containing a hydroxyl group (R); unsaturated fatty acids containing a hydroxyl group (S); unsaturated fatty acid esters containing a hydroxyl group (T); monomers (U) obtained by subjecting various hydroxyl group-containing monomers like (O) through (T) to addition reaction with ε-caprolactone adducts; secondary amino group-containing vinyl monomers (V); monomers having an active methylene group (W); vinyl monomers having a hydrolytic silyl group (X); vinyl monomers having a hydroxyl group blocked with a triorganosilyl group (Y); vinyl monomers containing a silyl ester group (Z); vinyl monomers containing a hemiacetal ester group or a hemiketal ester group (AA); vinyl monomers containing an epoxy group (BB); vinyl monomers containing an isocyanate group (CC); and vinyl monomers having a (single terminal alkylated) polyethylene glycol chain (DD).

Such monomers may be used after appropriate selection depending upon a desired final coating film performance. It should be noted that in the present invention the amount of the mixture (d) of the vinyl compounds containing acid group-containing monomers used is desirably 15 parts by mass or more based on 100 parts by mass of the combined amount of the condensate (c) containing the epoxy resin (a), the fatty acid (b) and, if necessary, the monobasic acid compound (e) and the mixture (d) of the vinyl compounds containing acid group-containing monomers. This raw material proportions are determined in consideration of the balance of the corrosion resistance and the hardness of a coating film to be obtained. In the present invention, the amount of the mixture (d) of the vinyl compounds containing acid group-containing monomers less than 15 parts by mass will result in a coating film lacking a desired balance between corrosion resistance and hardness.

The radical polymerization initiator used for the reaction of the mixture (d) of the vinyl compounds containing acid group-containing monomers is not particularly restricted, if it is one generally used. Such radical polymerization initiator may be used singly or in combination of two or more.

The amount of the radical polymerization initiator used is preferably within the range of from 0.1 to 10 parts by mass based on 100 parts of all the monomers (mixture (d) of the vinyl compounds containing acid group-containing monomers).

In order to control the molecular weight, the amount of the radical polymerization initiator, the reaction temperature and a chain transfer agent may be used. Examples of the chain transfer agent include alkylmercaptans such as n-octylmercaptan, n-dodecylmercaptan and tert-dodecylmercaptan; aromatic mercaptans such as benzylmercaptan and dodecylbenzylmercaptan; and thiocarboxylic acids such as thiomalic acid, their salts, alkyl esters, or polythiols.

The amount of the chain transfer agent may depend on the amount of the radical polymerization initiator used and the reaction temperature. In obtaining a polymer having a relatively low molecular weight, a chain transfer agent may be used in an amount of from 0.2 to 30% by mass based on the weight of all monomers.

In the polymerization of the mixture (d) of the vinyl compounds containing an acid group-containing monomer, graft polymerization may be performed with use of an organic solvent. Use of an organic solvent can reduce the viscosity of the reactant and therefore makes it possible to efficiently obtain a uniform product. The organic solvent for use for this purpose is not particularly restricted and any organic solvent may be used if it is an organic solvent conventionally used. In view of dispersibility of the mixture in water and desolventizability after dispersing of the mixture in water, it is desirable to use a hydrophilic solvent having solubility in water.

The resulting vinyl-modified epoxy ester resin may be made water-base by neutralizing part or all of the acid groups in the resin with a neutralizer, and subsequently adding water. In such a way, an aqueous dispersion of the vinyl-modified epoxy ester resin can be prepared.

The aqueous dispersion type vinyl-modified epoxy ester resin can be formed by neutralizing part or all of the acid groups in the resulting vinyl-modified epoxy ester resin with a basic compound, and dissolving or dispersing the neutralized polymer in water.

When dispersing in water the copolymer obtained in the above-mentioned method, an emulsifier and/or a dispersion stabilizer may be used together. As the emulsifier, various types of emulsifiers, such as ionic emulsifiers, e.g. anionic emulsifiers and cationic emulsifiers, and nonionic emulsifiers may be used.

The anionic emulsifiers are not particularly restricted and examples thereof include alkyl(benzene) sulfonate salts, alkyl sulfates, polyoxyethylene alkylphenol sulfate salts, styrene sulfonate salts, vinyl sulfate salts, or their derivatives.

The cationic emulsifiers are not particularly restricted and examples thereof include lauryltrimethylammonium chloride, didecyldimethylamnmonium chloride and lauryldimethylbenzylammonium chloride.

The nonionic emulsifiers are not particularly restricted and examples thereof include polyoxyethylene alkylphenol ethers, polyoxyethylene alkyl ethers, polyoxyethylene higher fatty acid esters, ethylene oxide-propylene oxide block copolymers, or their derivatives. These may be used singly or in combination of two or more thereof.

The amount of the emulsifier used is desirably within a range up to 10 parts by mass based on 100 parts by mass of the total resin solid content, and more desirably within the range of from 0.1 to 5 parts by mass.

It is desirable that the water-base coating composition of the present invention further contains the above-mentioned silicone-modified epoxy resin. Inclusion of the silicone-modified epoxy resin is preferred also because the adhesiveness of a coating film is improved more. The silicone-modified epoxy resin preferably is a compound represented by general formula (1) and/or a compound represented by the general formula (2).

The organic group contained in A in general formulas (1) and (2) has, for example, at least one chemical structural moiety selected from the group consisting of nonreactive hydrocarbon groups, a hydroxyl group, acid groups, an amino group, an ammonium group, a cyano group, a halogen atom, an amide bond, a cyclic ether group, an alkylene oxide unit, an alkoxy silyl group, an ultraviolet-absorbing group and a tetramethyl-4-piperidyl group.

The silicone-modified epoxy resin can be prepared, for example, by the steps of subjecting a diamine compound having one unit selected from the group consisting of a polyalkylene oxide unit and a polyorganosiloxane unit and having a primary amino group at each of both terminals to a Michael addition reaction to an acrylic compound represented by the following general formula (3), thereby obtaining a product; and further reacting the product with a diepoxy compound having a unit other than the unit which the diamine compound has and having an epoxy group at each of both terminals:

CH₂=CR⁴A ... (3)

wherein R⁴ is hydrogen or a methyl group, and A is an organic group bonding to its adjoining CR⁴ with a carbonyl group interposed therebetween.

In this preparation method, it is desirable to use the acrylic compound in an amount of from 1.8 to 2.2 molar times as much as the diamine compound and to use the diepoxy compound in an amount of from X+0.8 to X+1.2 moles for X moles of the product.

The silicone-modified epoxy resin can be obtained also by the steps of subjecting a diamine compound having one unit selected from the group consisting of a polyalkylene oxide unit and a polyorganosiloxane unit and having a primary amino group at each of both terminals to a Michael addition reaction to an acrylic compound represented by general formula (3), thereby providing a product; further reacting the product with a diepoxy compound having a unit other than the unit which the diamine compound has and having an epoxy group at each of both terminals, thereby obtaining a silicone-modified epoxy resin having epoxy groups at both terminals; and reacting a secondary amine compound to the epoxy groups at both terminals of the resulting silicone-modified epoxy resin.

It is also possible to obtain the silicone-modified epoxy resin by the steps of subjecting a diamine compound represented by the following general formula (4) to a Michael addition reaction to an acrylic compound represented by general formula (3), thereby obtaining a product; and further reacting the product with a diepoxy compound represented by the following general formula (5): 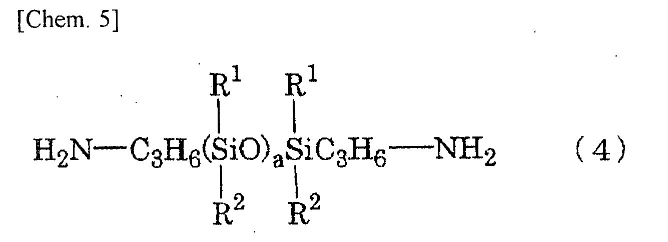 wherein R¹ and R² are each an alkyl group having 1 to 8 carbon atoms, an aryl group having 6 to 10 carbon atoms or an aralkyl group having 7 to 9 carbon atoms, a is an integer of from 1 to 135. 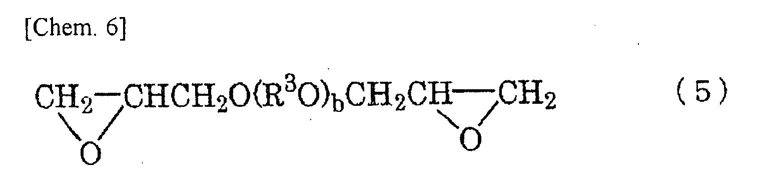 wherein R³ is -(CH₂)_{c}- or -CH₂CH(CH₃)-, and b is an integer of from 2 to 230.

The method for the preparation of the silicone-modified epoxy resin includes the steps of subjecting a diamine compound represented by the following general formula (6) to a Michael addition reaction to an acrylic compound represented by general formula (3), thereby obtaining a product; and further reacting the product with a diepoxy compound represented by the following general formula (7):

H₂N-C₃H₆O(R³O)_{b}C₃H₆-NH₂ ... (6)

wherein R³ is -(CH₂)_{c}-or -CH₂CH(CH₃)-, and b is an integer of from 2 to 230. 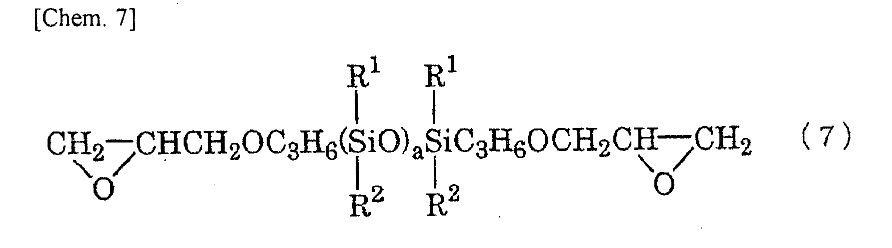 wherein R¹ and R² are each an alkyl group having 1 to 8 carbon atoms, an aryl group having 6 to 10 carbon atoms or an aralkyl group having 7 to 9 carbon atoms, and a is an integer of from 1 to 135.

The silicone-modified epoxy resin can be obtained also by the steps of subjecting a diamine compound represented by the above general formula (4) or (6) to a Michael addition reaction to an acrylic compound represented by the above general formula (3), thereby obtaining a product; further reacting the product with a diepoxy compound represented by the above general formula (5) or (7), thereby obtaining a silicone-modified epoxy resin having epoxy groups on its both terminals; and reacting a secondary amine compound to the epoxy groups at both the terminals of the resulting silicone-modified epoxy resin.

The water-base coating composition of the present invention can be used, if necessary, after incorporation of additives suitable for various applications, for example, various known and conventional additives such as metal driers, antioxidants, defoaming agents and thickeners.

The water-base coating composition of the present invention may also be used together with various water-base resins. Such resins are desirably resins having active hydrogen-containing groups. The form, kind and the like thereof are not restricted.

The method for the production of the water-base coating composition is not particularly restricted and it can be prepared, for example, by dispersing the aforementioned calcium carbonate filler and other pigments with a resin or additive for pigment dispersion or, in some cases, the water-based vinyl-modified epoxy ester resin, thereby preparing a mill base of a pigment, and then adding the water-based vinyl-modified epoxy ester resin, various additives and water or solvent for adjusting the viscosity, followed by well mixing.

The water-base coating composition of the present invention can be coated by airless coating or a conventional method using a brush, a trowel, a roller or the like. For thick coating, airless coating is preferred. Regarding the film thickness in coating, it is desirable that a dry coating film has a thickness of from 50 to 200 µm. If the dry film thickness exceeds 250 µm, problems with respect to sagging property or the like will arise.

It is desirable that the water-base coating composition of the present invention be used for coating on metal materials, such as iron-based substrates, zinc-based substrates and aluminum-based substrates. It is particularly suitable for coating large structures made of the above-mentioned base materials. Furthermore, it can be used suitably for ship cabin coating, in which deterioration of gloss due to increase in humidity may become a serious problem since coating in a hermetically sealed space is needed. The present invention also encompasses the aforementioned coated steel sheet having a coating film formed from the water-base coating composition mentioned above.

### EFFECTS OF THE INVENTION

The water-base coating composition of the present invention is an ambient drying water-base coating composition having excellent properties such as gloss, coating film appearance, anticorrosion property and moisture resistance. Because of being excellent in such physical properties, coating compositions for coating ships, bridges and the like, which have been difficult to be water-base, can be made water-base.

### BEST MODES FOR CARRYING OUT THE INVENTION

The present invention is described in more detail below with reference to Examples and Comparative Examples, but the invention is not limited thereto. Part and % in the following description are all on mass basis unless otherwise stated.

### (Preparation of coating composition)

### Preparation of aqueous dispersion of vinyl-modified epoxy ester resin

Into a four-necked flask equipped with a stirrer, a thermometer, a temperature control device and a nitrogen introduction tube, 50 parts of dehydrated caster oil fatty acid, 500 parts of EPICOAT 1001 (epoxy equivalent weight: 475 g/mol) and 60.2 parts of p-tert-butylbenzoic acid were charged. Regarding the raw material proportions, the epoxy groups derived from an epoxy resin are in excess of the carboxyl groups of the fatty acid, and the excess epoxy groups are equivalent of the carboxyl groups originating in the p-tert-butylbenzoic acid.

Further, 0.02 part of triethylamine is charged into the reaction vessel and was heated to 180°C under stirring. When the internal temperature reaches near 180°C, dehydration starts and the temperature is increased to 220°C, whereby esterification is advanced while the state of the dehydration is monitored. The reaction was performed for about 3 hours until the acid value of the solid content in the content became 1 or less. Subsequently, the internal temperature was decreased to 150°C, and then 253.4 parts of butylcellosolve was added to obtain a 75% solution of the non-volatile matter of the fatty acid ester of the epoxy resin.

Next, while the internal temperature was maintained at 125°C, a mixture of 120 parts of styrene, 49.8 parts of 2-ethylhexyl methacrylate, 40 parts of acrylic acid and 30 parts of a monoester compound derived from polyethylene glycol having a molecular weight 400 and methacrylic acid, 5 parts of tert-butyl peroxy-2-ethylhexanoate, and 3 parts of di-tert-butyl peroxyether were added to the reaction vessel over 1 hour. Then, a reaction was performed at that temperature for 10 hours, whereby the fatty acid ester of the epoxy resin was subjected to vinylation reaction. Here, the amount of the vinyl compound used is about 24% based on 100 parts by mass of the combined amount of the vinyl compounds and the condensate (c) containing the epoxy resin and the fatty acid. The resulting vinyl-modified epoxy ester resin was a viscous solution containing 80% of non-volatile matter. The acid value of the solid content in the solution was 30 mgKOH/g.

Then, 54 g of triethylamine was added to the reaction vessel and mixed well. Under stirring, 1550 g of ion-exchange water was added little by little. With addition of the ion exchange water, the content was changed to a viscous cloudy solution. Further addition of ion exchange water provided a white emulsion. The aqueous dispersion of the resulting vinyl-modified epoxy ester resin was an aqueous dispersion having a solid content concentration of 35% and a pH of 9.2.

### Preparation of silicone-modified epoxy resin

Into a flask, 53.3 parts by mass of BY16-853C (manufactured by Dow Corning Toray Co., Ltd.) as a diamine compound and 50 parts by mass of xylene were charged, followed by heating to 70°C under blowing dry nitrogen. Subsequently, 20.5 parts by mass of 4-hydroxybutyl acrylate (molecular weight 144) as an acrylic compound and 20 parts by mass of n-butanol were dropped simultaneously over 30 minutes.

After completion of the dropping, that temperature was maintained for 1 hour and then 21.2 parts by mass of DENACOL EX-810 (manufactured by Nagase Chemicals Ltd.) as a diepoxy compound and 20 parts by mass of xylene were dropped simultaneously over 30 minutes.

As the result, there was obtained a silicone-modified epoxy resin with a structure where U¹ and U² in a general formula (1) are each as shown below, wherein each a in U¹ is from 4 to 8, b in U² is from 1 to 3, R⁴ is hydrogen, A is 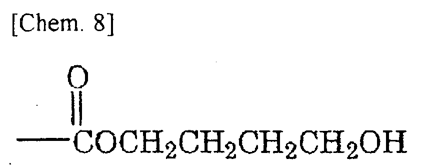 and n is 3.

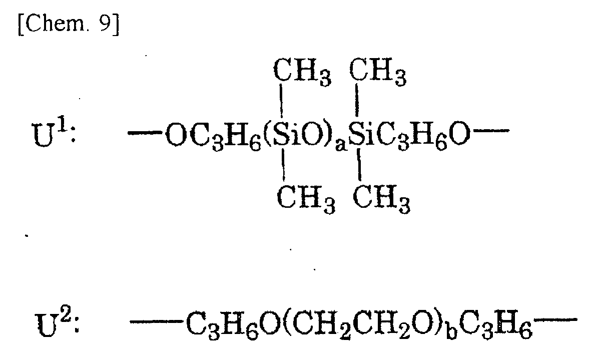

### Example 1

To 60.0 parts of the above-mentioned aqueous dispersion, 40.0 parts of LUMINUS (manufactured by Maruo Calcium Co., Ltd.), which is a commercially available calcium carbonate filler, 2.0 parts of titanium oxide as a pigment, 0.5 part of BYK-028 (manufactured by BYK Japan KK) as a defoaming agent, 0.2 part of DICNATE 3111 (manufactured by Dainippon Ink & Chemicals, Inc.) as a drier, and 0.3 part of SN thickener 636 (manufactured by Sannopuko, Inc.) as a thickener were added, followed by mixing and dispersing with a sand grind mill to yield a water-base coating composition.

### Examples 2-5, Comparative Examples 1-3

Water-base coating compositions were prepared in the same manner as in Example 1, except for changing the recipe given in Table 1. In Example 4, 0.2 part of the above-mentioned silicone-modified epoxy resin was further added to an aqueous dispersion. Calcium carbonate A is LUMINUS (manufactured by Maruo Calcium Co., Ltd.), and calcium carbonate B is SUPER 1700 (manufactured by Maruo Calcium Co., Ltd.). Calcium carbonate B, which is a product without treatment, does not satisfy the requirements of the calcium carbonate of the present invention.

### Evaluation of coating film appearance (gloss)

Each of coating films of the water-base coating compositions obtained in Example 1 to 5 and Comparative Examples 1 to 3 was checked for its gloss. Each of the water-base coating compositions was applied with an applicator and dried in two ways, namely, at 20°C, 50% relative humidity for 1 day and at 20°C, 90% relative humidity for 1 day. The applicator was selected so that the film thickness of a dry coating film might become 80±5 µm. The 60° specular glossiness of the resulting coating films were measured.

### Evaluation of coating film appearance

In order to evaluate the coating film appearance of the water-base coating compositions obtained in Example 1 to 5 and Comparative Examples 1 to 3, sagging property was examined. Using a sag tester, the water-base coating composition was applied onto a panel made of a glass sheet and the specimen was immediately caused to stand vertically. Whether sagging of a coating occurs or not depending on the thickness of the sample layer was examined. The sag tester had six gaps, namely, 20, 25, 30, 35, 40 and 45mil.

### Evaluation of anticorrosion property

Each of the water-base coating compositions obtained in Example 1 to 5 and Comparative Examples 1 to 3 were applied on an undercoating and then the adhesiveness was examined.

An oil-base rust preventive coating CR MARINE WHITE PRIMER M (manufactured by Nippon Paint Marine Coatings Co., Ltd.) was spray coated to a 7 cm×15 cm steel plate (shot blast steel plate) and then dried at 20°C for 7 days.

The thickness of the undercoating was 40±5 µm and the thickness of the top coating was 80±5 µm.

This test plate was exposed to a neutral salt spray test machine of JIS K5600-7-1 for 200 hours.

Then, an X-shaped cut penetrating the coating films on the panel and reaching the base surface was formed with a retractable knife. A pressure sensitive adhesive cellophane tape was stuck thereon and then peeled off. The adhesiveness between the coating films was evaluated according to the criteria " ⊚ : no or almost completely no delamination is recognized; ○: almost no delamination is recognized; Δ: delamination in a small portion was recognized; x: delamination occurred in most of the peeled area. "

**[Table 1]**

| | | | Example | | | | | Comparative Example | | |
|---|---|---|---|---|---|---|---|---|---|---|
| | | | 1 | 2 | 3 | 4 | 5 | 1 | 2 | 3 |
| Composition recipe | Aqueous dispersion of vinyl-modified epoxy ester resin | | 60.0 | 60.0 | 60.0 | 60.0 | 60.0 | 60.0 | 60.0 | 60.0 |
| | Titanium oxide | | 2.0 | 12.0 | 15.0 | 15.0 | 15.0 | 5.0 | 5.0 | 15.0 |
| | Calcium carbonate A | | 40.0 | 15.0 | 30.0 | 30.0 | 27.0 | 10.0 | 55.0 | None |
| | Calcium carbonate B | | None | None | None | None | 3.0 | None | None | 30.0 |
| | Defoaming agent | | 0.5 | 0.5 | 0.5 | 0.5 | 0.5 | 0.5 | 0.5 | 0.5 |
| | DICNATE 3111 | | 0.2 | 0.2 | 0.2 | 0.2 | 0.2 | 0.2 | 0.2 | 0.2 |
| | Silicon-containing block polymer | | None | None | None | 0.2 | None | None | None | None |
| | Thickener | | 0.3 | 0.3 | 0.3 | 0.3 | 0.3 | 0.3 | 0.3 | 0.3 |
| | Total | | 103.0 | 88.0 | 106.0 | 106.2 | 106.0 | 76.0 | 121.0 | 106.0 |
| | Pigment concentration in dry coating film (% by volume) | | 47.5 | 33.0 | 46.3 | 46.3 | 46.3 | 22.3 | 56.1 | 46.3 |
| | Calcium carbonate concentration in dry coating film (% by volume) | | 46.1 | 22.1 | 35.4 | 35.4 | 35.4 | 17.1 | 53.1 | 35.4 |
| Coating film performance | Gloss (60°) | 20°C, 50 % RH | 55 | 60 | 55 | 55 | 55 | 60 | 20 | 20 |
| | | 20°C, 90 %RH | 40 | 45 | 40 | 40 | 40 | 15 | 5 | 5 |
| | Sagging property (mil) | | 45 | 45 | 45 | 45 | 45 | 20 | 45 | 40 |
| | Adhesiveness | | ○ | ○ | ○ | ⊚ | ○ | ○ | ○ | ○ |

The results in Table 1 clearly shows that the water-base coating composition by the present invention has been improved in gloss, coating film appearance, anticorrosion property and moisture resistance.

It has become clear that the water-base coating composition containing a calcium carbonate filler and a vinyl-modified epoxy ester resin having a specific resin composition has excellent gloss, coating film appearance, anticorrosion property and moisture resistance.

### INDUSTRIAL APPLICABILITY

The water-base coating composition of the present invention can be used suitably for coating in the fields of ships and bridges where high anticorrosion property and appearance are required.

## Claims

1. A water-base coating composition comprising an aqueous dispersion type vinyl-modified epoxy ester resin and calcium carbonate, wherein said calcium carbonate is precipitated calcium carbonate treated with a salt of a vinyl polymer having a carboxyl group and is contained in a solid content of the coating composition in a proportion of from 20 to 50% by volume, and a volume ratio of a pigment/a total solid content of the coating is 50% or less.

2. The water-base coating composition according to claim 1, wherein the calcium carbonate has an average particle diameter of from 0.01 to 0.5 µm, wherein the average particle diameter is the length of a side of a cubic crystal determined from the specific surface area measured by the gas absorption method (BET method), while assuming calcium carbonate particles to be cubic particles.

3. The water-base coating composition according to claim 1 or 2, further comprising a silicone-modified epoxy resin.

4. The water-base coating composition according to claim 3, wherein the silicone-modified epoxy resin includes a compound represented by the following general formula (1): 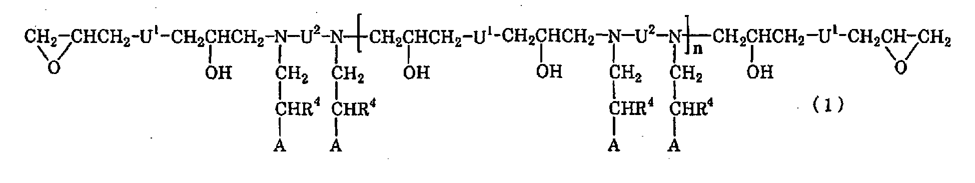 wherein U¹ is -O(R³O)_{b}-, where R³ is -(CH₂)_{c}- or -CH₂CH(CH₃)-, and U² is a structure represented by 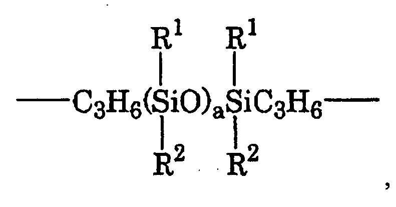 or U¹ is a structure represented by 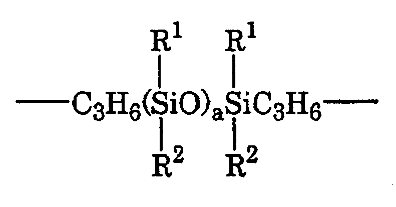 and U² is -O(R³O)_{b}-, where R³ is -(CH₂)_{c}- or -CH₂CH(CH₃)-, wherein R¹ and R² are each an alkyl group having 1 to 8 carbon atoms, an aryl group having 6 to 10 carbon atoms or an aralkyl group having 7 to 9 carbon atoms, R⁴ is hydrogen or a methyl group, a is an integer of from 1 to 135, b is an integer of from 2 to 230 and c is an integer of from 1 to 4, A is an organic group bonding to its adjoining -CHR⁴- with a carbonyl group interposed therebetween, n is an integer of from 1 to 16, R¹⁰ is an alkyl group having from 1 to 8 carbon atoms which may have a hydroxyl group, and/or a compound represented by the following general formula (2): 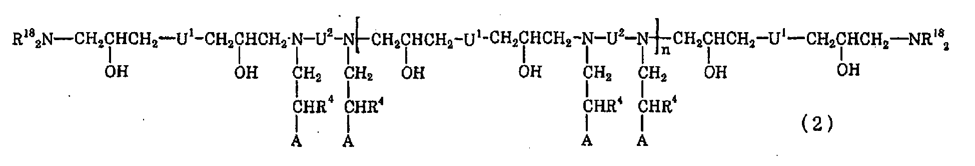 wherein U¹, U², and R¹ through R⁴ have the same definitions as the general formula (1).

5. A coated steel sheet having a coating film formed from the water-base coating composition according to claim 1, 2, 3 or 4.

## Patentansprüche

1. Eine Beschichtungszusammensetzung auf Wasserbasis, umfassend ein Vinylmodifiziertes Epoxyesterharz vom wässrigen Dispersionstyp und Calciumcarbonat, wobei das Calciumcarbonat gefälltes Calciumcarbonat ist, das mit einem Salz eines Vinylpolymers mit einem Carboxylrest behandelt ist und in einer Menge von 20 bis 50 Vol.-% als Feststoffgehalt der Beschichtungszusammensetzung enthalten ist, und wobei das Volumenverhältnis eines Pigments/eines Gesamt-Feststoffgehalts der Beschichtung 50% oder weniger beträgt.

2. Die Beschichtungszusammensetzung auf Wasserbasis gemäß Anspruch 1, wobei das Calciumcarbonat einen mittleren Teilchendurchmesser von 0,01 bis 0,5 µm aufweist, wobei der mittlere Teilchendurchmesser die Länge einer Seite eines kubischen Kristalls, bestimmt durch die spezifische Oberfläche, gemessen durch das Gasadsorptionsverfahren (BET-Verfahren), ist, wobei man annimmt, dass die Calciumcarbonat-Teilchen kubische Teilchen sind.

3. Die Beschichtungszusammensetzung auf Wasserbasis gemäß Anspruch 1 oder 2, ferner umfassend ein Silikon-modifiziertes Epoxyharz.

4. Die Beschichtungszusammensetzung auf Wasserbasis gemäß Anspruch 3, wobei das Silikon-modifizierte Epoxyharz eine Verbindung, dargestellt durch die folgende allgemeine Formel (1): 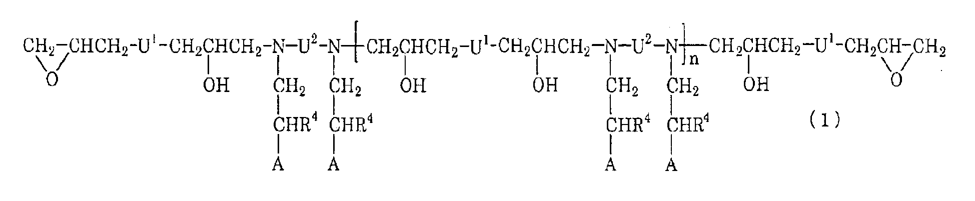 enthält,
wobei U¹ für -O(R³O)_{b}- steht, wobei R³ für -(CH₂)_{c} oder -CH₂CH(CH₃)- steht, und U² eine Struktur, dargestellt durch 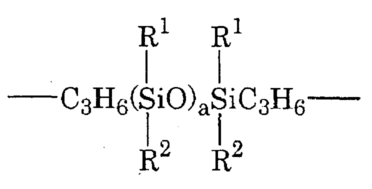 ist,
oder U¹ ein Struktur, dargestellt durch 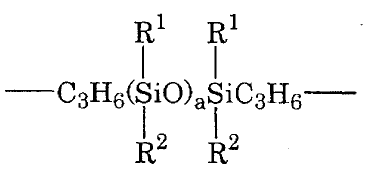 ist,
und U² für -O(R³O)_{b}- steht, wobei R³ für -(CH₂)_{c}- oder -CH₂CH(CH₃)- steht, wobei R¹ und R² jeweils ein Alkylrest mit 1 bis 8 Kohlenstoffatomen, ein Arylrest mit 6 bis 10 Kohlenstoffatomen oder ein Aralkylrest mit 7 bis 9 Kohlenstoffatomen sind, R⁴ Wasserstoff oder eine Methylgruppe ist, a eine ganze Zahl von 1 bis 135 ist, b eine ganze Zahl von 2 bis 230 ist und c eine ganze Zahl von 1 bis 4 ist, A ein organischer Rest, welcher an seinem benachbarten Rest -CHR⁴- mit einem dazwischen eingebrachten Carbonylrest gebunden ist, ist, n eine ganze Zahl von 1 bis 16 ist, R¹⁰ ein Alkylrest mit 1 bis 8 Kohlenstoffatomen, welcher einen Hydroxylrest aufweisen kann, und/oder eine Verbindung, dargestellt durch die folgende allgemeine Formel (2) 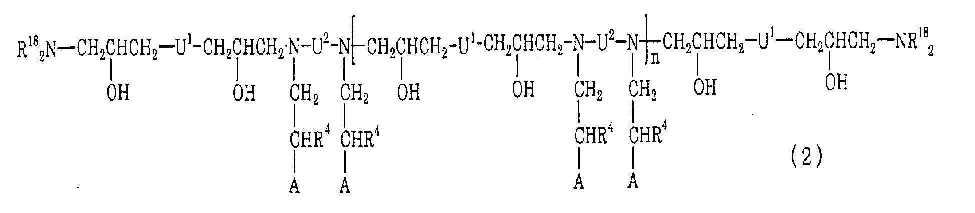 ist, wobei U¹, U² und R¹ bis R⁴ die gleichen Definitionen wie in der allgemeinen Formel (1) aufweisen.

5. Ein beschichtetes Stahlblech mit einem Beschichtungsfilm, gebildet aus der Beschichtungszusammensetzung auf Wasserbasis gemäß Anspruch 1, 2, 3 oder 4.

## Revendications

1. Composition de revêtement à base d'eau comprenant une dispersion aqueuse de type ester de résine époxy modifiée avec un vinyle et du carbonate de calcium, dans laquelle ledit carbonate de calcium est du carbonate de calcium précipité traité avec un sel de polymère vinylique possédant un groupement carboxyle et est contenu dans une fraction solide de la composition de revêtement dans des proportions allant de 20 à 50% par volume, et un rapport volumique pigment sur fraction solide totale du revêtement est de 50% ou moins.

2. Composition de revêtement à base d'eau selon la revendication 1, dans laquelle le carbonate de calcium a un diamètre particulaire moyen allant de 0.01 à 0.5 µm, dans laquelle le diamètre particulaire moyen est la longueur d'un côté d'un cristal cubique déterminée à partir de l'aire de surface spécifique mesurée par la méthode d'absorption gazeuse (méthode BET), tout en supposant que les particules de carbonate de calcium sont des particules cubiques.

3. Composition de revêtement à base d'eau selon la revendication 1 ou 2 comprenant en outre une résine époxy modifiée avec un silicone.

4. Composition de revêtement à base d'eau selon la revendication 3, dans laquelle la résine époxy modifiée avec un silicone inclut un composé représenté par la formule générale suivante (1): 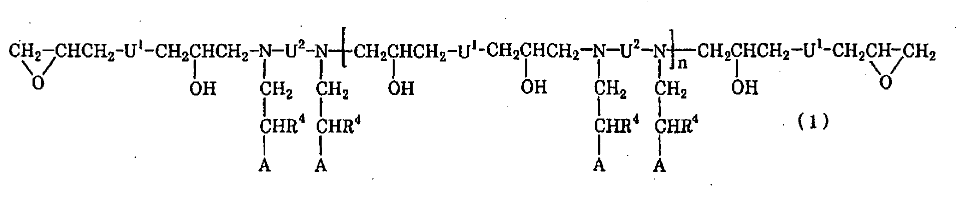 dans laquelle U¹ est -O(R³O)_{b}-, où R³ est -(CH₂)_{c}- ou -CH₂CH(CH₃)-, et U² est une structure représentée par 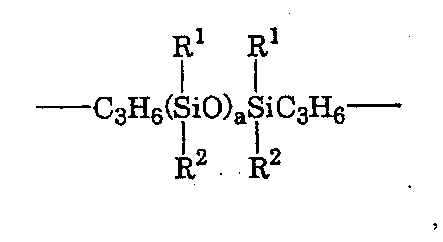 où U¹ est une structure représentée
par 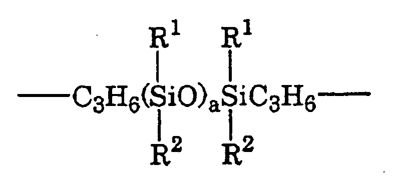 et U² est -O(R³O)_{b}-, où R³ est -(CH₂)_{c}- ou -CH₂CH(CH₃)-, dans laquelle R₁ et R₂ sont chacun un groupement alkyle ayant 1 à 8 atomes de carbone, un groupement aryle ayant 6 à 10 atomes de carbone ou un groupement aralkyle ayant 7 à 9 atomes de carbone, R₄ est de l'hydrogène ou un groupement méthyle, a est un entier de 1 à 135, b est un entier de 2 à 230 et c est un entier de 1 à 4, A est un groupement organique attaché à son -CHR⁴- adjacent avec un groupement carbonyle interposé entre les deux, n est un entier de 1 à 16, R¹⁰ est un groupement alkyle ayant de 1 à 8 atomes de carbone qui peuvent avoir un groupement hydroxyle, et/ou un composé représenté par la formule générale suivante (2) : 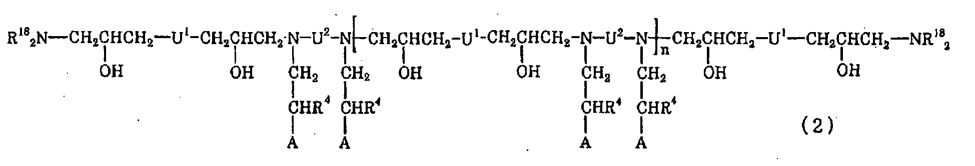 où U¹, U² et R¹ jusque R⁴ ont les mêmes définitions que dans la formule générale (1).

5. Feuille d'acier enduit ayant un film de revêtement formé par la composition de revêtement à base d'eau selon la revendication 1, 2, 3 ou 4.
